# EUROPEAN PATENT APPLICATION

(11) **EP 4 567 961 A1**
(43) Date of publication of application: **11.06.2025**
(21) Application number: 22964091.7
(22) Date of filing: 04.11.2022
(51) Int. Cl.: H01M 10/48, G01M 3/20

(54) **GAS TIGHTNESS TESTING METHOD, APPARATUS AND SYSTEM FOR BATTERY PACK, AND BATTERY PACK**

(71) Applicant: Contemporary Amperex Technology Co., Limited, Ningde, Fujian 352100 (CN)
(72) Inventor: ZHANG, Bin, Ningde, Fujian 352100 (CN); CHEN, Chen, Ningde, Fujian 352100 (CN); ZHOU, Hailun, Ningde, Fujian 352100 (CN)
(74) Representative: Behr, Wolfgang
(86) International application number: PCT/CN2022/130068
(87) International publication number: WO 2024/092787

(57) **Abstract**

The disclosure provides a method, device and system for airtightness testing of a battery pack and a battery pack. The method for airtightness testing includes: placing a gas source device in a battery pack; sealing a case of the battery pack; detecting, in response to meeting a preset condition, concentration of a source gas in the battery pack, and determining whether the battery pack meets the airtightness standard. The system for airtightness testing includes a processor, a gas source device, a gas sensor, a first heating assembly used to heat a battery cell, and a second heating assembly used to heat the source gas. A battery management system can obtain a more accurate airtightness result by detecting the concentration of the source gas.

## Description

### Technical Field

The disclosure relates to the technical field of battery tests, and in particular to a method, device and system for airtightness testing of a battery pack, and a battery pack.

### Background Art

In recent years, with the rapid development of new energy vehicles, safety of electric vehicles is increasingly valued by people. A traction battery pack (Battery Pack) is a power source of new energy vehicles, and its leak tightness is crucial to the performance and safety of the new energy vehicles. "GB/T 4208-2017 DEGREES OF PROTECTION PROVIDED BY ENCLOSURES (IP CODE)", which is proposed and shall be under the jurisdiction of National Technical Committee on Electrical Safety Standardization Administration of China, has made specific requirements for the test standard on degrees of protection provided by enclosures of battery packs of new energy vehicles. It has become a more important part to detect the leak tightness of the battery packs by fast, efficient and safe methods.

### Technical Problem

The disclosure is intended to resolve at least one of the technical problems in the background art. To this end, an objective of the disclosure is to provide a method, device and system for airtightness testing of a battery pack, and a battery pack.

### Technical Solutions

In a first aspect, an embodiment of the disclosure provides a method for airtightness testing of a battery pack. The method includes the following steps: placing a gas source device in a battery pack; sealing the battery pack; and detecting, in response to meeting a preset condition, concentration of a source gas in the battery pack, so as to determine whether the battery pack meets the airtightness standard; wherein the gas source device is used to release the source gas; and the preset condition includes allowing the battery pack to stand for a first preset duration.

In one or more embodiments of the disclosure, the step of detecting, in response to meeting a preset condition, concentration of a source gas in the battery pack, so as to determine whether the battery pack meets the airtightness standard includes the following sub-steps: recording, in response to meeting a preset condition, the time when the source gas in the battery pack reaches a maximum concentration; and detecting, after a second preset duration from the time when the maximum concentration is reached, a first concentration of the source gas in the battery pack, so as to determine, on the basis of the first concentration of the source gas, whether the battery pack meets the airtightness standard.

In one or more embodiments of the disclosure, the step of detecting, in response to meeting a preset condition, concentration of a source gas in the battery pack, so as to determine whether the battery pack meets the airtightness standard includes the following sub-steps: determining, in response to meeting a preset condition, a rate of change in concentration of the source gas in the battery pack; and determining, on the basis of the rate of change in concentration of the source gas, whether the battery pack meets the airtightness standard.

In one or more embodiments of the disclosure, the step of determining, in response to meeting a preset condition, a rate of change in concentration of the source gas in the battery pack includes the following sub-steps: detecting, in response to meeting a preset condition, a second concentration of the source gas in the battery pack; detecting, after a second preset duration, a third concentration of the source gas in the battery pack; and determining, on the basis of the second concentration of the source gas and the third concentration of the source gas, the rate of change of the source gas in the battery pack.

In one or more embodiments of the disclosure, the step of determining, in response to meeting a preset condition, a rate of change in concentration of the source gas in the battery pack includes the following sub-steps: recording, in response to meeting a preset condition, a maximum concentration of the source gas reached in the battery pack; detecting, after a second preset duration from the time when the maximum concentration is reached, a fourth concentration of the source gas in the battery pack; and determining, on the basis of the maximum concentration and the fourth concentration of the source gas, the rate of change in concentration of the source gas in the battery pack.

In one or more embodiments of the disclosure, the gas source device includes dry ice.

In one or more embodiments of the disclosure, the preset condition further includes: heating the gas source device.

In one or more embodiments of the disclosure, the second preset duration is greater than 2 hours.

In a second aspect, an embodiment of the disclosure provides a device for airtightness testing of a battery pack. The device includes: a first module, configured to place a gas source device in a battery pack; a second module, configured to seal the battery pack; and a third module, configured to detect, in response to meeting a preset condition, concentration of a source gas in the battery pack, so as to determine whether the battery pack meets the airtightness standard; wherein the gas source device is used to release the source gas; and the preset condition includes allowing the battery pack to stand for a first preset duration.

In a third aspect, an embodiment of the disclosure provides a seal head for airtightness testing of a battery pack. The seal head includes: a housing; a sealing element arranged in the housing and covered with an explosion-proof valve of the battery pack, wherein the sealing element is provided with a communicating hole; and a detection assembly, at least part of which is arranged in the housing, wherein the detection assembly includes a body portion and a probe portion, the probe portion is provided with a gas sensor for detecting a source gas, and the probe portion is configured to protrude from the body portion and pass through the communicating hole; and the detection assembly further includes a processor and a memory, the memory stores a computer program, and the computer program, when executed by the processor, causes the processor to perform the steps of the method according to the embodiment in the first aspect of the disclosure.

In a fourth aspect, an embodiment of the disclosure provides a system for airtightness testing of a battery pack. The system includes: a gas source device used to release a source gas; a first heating assembly used to heat the battery pack; a second heating assembly used to heat the gas source device; and a gas concentration sensor used to detect concentration of the source gas; wherein a processor is electrically coupled with the first heating assembly, the second heating assembly, and the gas concentration sensor. A battery management system further includes a memory, the memory stores a computer program, and the computer program, when executed by the processor, causes the processor to perform the steps of the method according to the embodiment in the first aspect of the disclosure.

In a fifth aspect, an embodiment of the disclosure provides a battery pack. The battery pack includes a device for airtightness testing according to the embodiment in the second aspect of the disclosure or a system for airtightness testing according to the embodiment in the third aspect of the disclosure.

The above description is only an overview of the technical solutions of the disclosure. In order to more clearly understand the technical means of the disclosure to implement same according to the contents of the description, and in order to make the above and other objectives, features and advantages of the disclosure more obvious and understandable, specific implementations of the disclosure are exemplarily described below.

### Brief Description of the Drawings

In the accompanying drawings, the same reference numerals denote the same or similar parts or elements throughout a plurality of drawings unless otherwise specified. These drawings are not necessarily drawn to scale. It should be understood that these drawings depict only some embodiments according to the disclosure herein and are not to be construed as limiting the scope of the disclosure.
FIG. 1 is a schematic structural diagram of a vehicle according to some embodiments of the disclosure;
FIG. 2 is a schematic exploded structural diagram of a battery according to some embodiments of the disclosure;
FIG. 3 is a flowchart of a method for airtightness testing according to some embodiments of the disclosure;
FIG. 4 is a circuit block diagram of a system for airtightness testing according to some embodiments of the disclosure;
FIG. 5 is a curve graph showing change in concentration of a source gas over time according to some embodiments of the disclosure;
FIG. 6 is a curve graph showing change in concentration of a source gas over time according to some embodiments of the disclosure;
FIG. 7 is a curve graph showing change in concentration of a source gas over time according to some embodiments of the disclosure;
FIG. 8 is a circuit block diagram of a system for airtightness testing according to some embodiments of the disclosure;
FIG. 9 is a hardware schematic diagram of a seal head for airtightness testing according to some embodiments of the disclosure; and
FIG. 10 is a circuit block diagram of a seal head for airtightness testing according to some embodiments of the disclosure.

### List of reference signs:

1000 - Vehicle; 100 - Battery pack; 200 - Controller; 300 - Motor;
10 - Case; 11 - First portion; 11a - Explosion-proof valve hole; 12 - Second portion; 20 - Battery cell;
80 - Seal head; 81 - Housing; 82 - Sealing element; 82a - Communicating hole; 83 - Detection assembly; 83a - Detection body; 83b - Probe portion.

### Detailed Description of Embodiments

Embodiments of the technical solutions of the disclosure will be described in detail below with reference to the accompanying drawings. The following embodiments are merely intended to more clearly illustrate the technical solutions of the disclosure, so they merely serve as examples, but are not intended to limit the scope of protection of the disclosure.

Unless otherwise defined, all technical and scientific terms used herein have the same meanings as those commonly understood by those skilled in the art to which the disclosure belongs. The terms used herein are merely for the purpose of describing specific embodiments, but are not intended to limit the disclosure. The terms "comprising" and "having" and any variations thereof in the description and the claims of the disclosure as well as the brief description of the drawings described above are intended to cover non-exclusive inclusion.

In the description of the embodiments of the disclosure, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the disclosure, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the disclosure. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the disclosure, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the disclosure, the term "a plurality of" means two or more (including two), similarly the term "a plurality of groups" means two or more groups (including two groups), and the term "a plurality of pieces" means two or more pieces (including two pieces).

In the description of the embodiments of the disclosure, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the disclosure, rather than indicating or implying that the apparatus or element considered must have a particular orientation or be constructed and operated in a particular orientation, and therefore not to be construed as limiting the embodiments of the disclosure.

In the description of the embodiments of the disclosure, unless otherwise explicitly specified and defined, the technical terms such as "install", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the disclosure can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

During airtightness testing of battery packs in an industrial production environment, a water spraying method is a time-consuming and labor-intensive approach with a low production efficiency, and accordingly is difficult to adapt to the requirements of large-scale production lines. Therefore, watertight airtightness testing of battery packs is mainly carried out through a positive pressure test or a negative pressure test on the current production lines. For example, an airtightness testing tooling compatible with an explosion-proof valve or balance valve is made and mounted onto the explosion-proof valve or balance valve, a gas is pushed into a battery pack or sucked out of the battery pack by means of the explosion-proof valve or balance valve, making the battery pack as a whole show a short period of positive or negative pressure, and the degree of differential pressure decay in the battery pack within a period of time is detected to determine whether airtightness of the battery pack meets requirements. However, as the gas passes through a gas-permeable film of the explosion-proof valve or balance valve during testing, gas permeability is significantly reduced by the barrier of the gas-permeable film, resulting in a long test time and affecting the production takt.

Based on the above considerations, the applicant provides a method, device and system for airtightness testing of a battery pack. A gas source device is arranged inside a case of the battery pack.

A battery cell disclosed in the embodiments of the disclosure may be used in, but is not limited to, a power consuming device, such as a vehicle, a ship, or an aircraft. A power supply system provided with the power consuming device composed of a battery cell, a battery and the like disclosed in the disclosure may be used.

Embodiments of the disclosure provide a control method and device for thermal management of a vehicle battery. The vehicle includes, but is not limited to, a passenger car, a commercial vehicle, an engineering vehicle, an automated guided vehicle (AGV), and the like. The vehicle battery may be a non-replaceable battery that supports charging of the entire vehicle, or a replaceable battery that supports recharging after being separated from the vehicle body.

For ease of description of the following embodiments, a vehicle 1000 according to an embodiment of the disclosure is taken as an example for description.

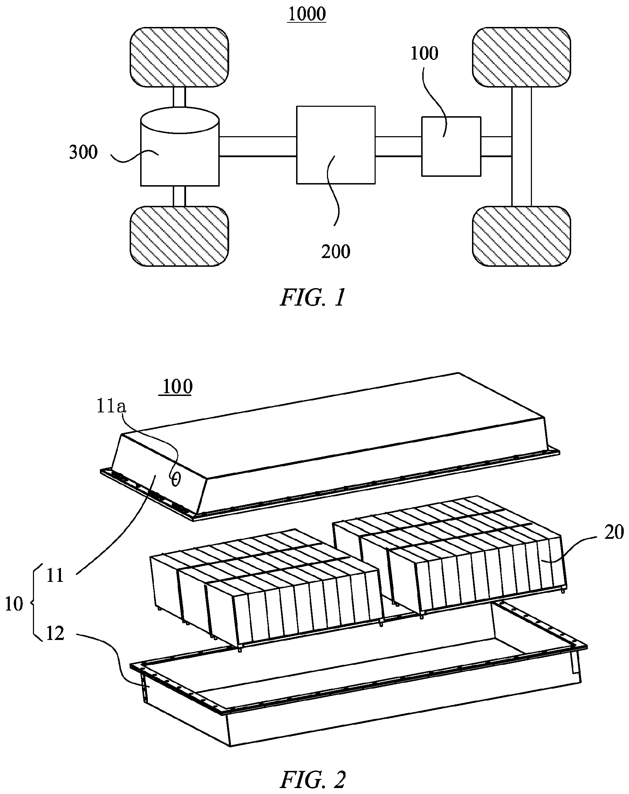

With reference to FIG. 1, FIG. 1 is a schematic structural diagram of a vehicle according to some embodiments of the disclosure. The vehicle 1000 may be a battery electric vehicle, a hybrid electric vehicle, an extended-range electric vehicle, etc. (all of which are hereinafter referred to as electric vehicles). The vehicle 1000 is provided with a battery pack 100 inside, and the battery pack 100 may be arranged at the bottom, the front or the rear of the vehicle 1000. The battery pack 100 may be used to supply power to the vehicle 1000. For example, the battery pack 100 may serve as a power source for operating the vehicle 1000.

In some embodiments of the disclosure, the battery pack 100 can not only serve as a power supply for operating the vehicle 1000, but also serve as a power supply for driving the vehicle 1000, instead of or partially instead of fuel or natural gas, to provide driving power for the vehicle 1000.

With reference to FIG. 2, FIG. 2 is an exploded view of a battery according to some embodiments of the disclosure. The battery pack 100 includes a case 10 and a battery cell 20. The battery cell 20 is accommodated in the case 10. The case 10 is configured to provide an accommodation space for the battery cell 20, and the case 10 may have various structures. In some embodiments, the case 10 may include a first portion 11 and a second portion 12. The first portion 11 and the second portion 12 are fitted to each other in a covered manner, and the first portion 11 and the second portion 12 jointly define the accommodation space for accommodating the battery cell 20. The second portion 12 may be of a hollow structure with one end open, the first portion 11 may be of a plate-like structure, and the first portion 11 covers an open side of the second portion 12 such that the first portion 11 and the second portion 12 jointly define the accommodation space; and the first portion 11 and the second portion 12 may also be of a hollow structure with one side open, and an open side of the first portion 11 covers the open side of the second portion 12. Of course, the case 10 formed by the first portion 11 and the second portion 12 may be in various shapes, such as a cylinder, a cuboid, and a blade. The case 11 is provided with an explosion-proof valve 11a. A watertight gas-permeable film allowing a gas to permeate is arranged in the explosion-proof valve 11a.

In the battery pack 100, a plurality of battery cells 20 may be provided. The plurality of battery cells 20 may be connected in series, in parallel, or in series and parallel. The series-parallel connection means that the plurality of battery cells 20 are connected both in series and in parallel. The plurality of battery cells 20 may be directly connected together in series, or in parallel, or in series and parallel, and then a whole body composed of the plurality of battery cells 20 is accommodated in the case 10. Of course, the battery pack 100 may also be in the form that a plurality of battery cells 20 are firstly connected in series or in parallel or in series and parallel to form a battery module, and then a plurality of battery modules are connected in series or in parallel or in series and parallel to form a unit and are accommodated in the case 10. The battery pack 100 may further include other structures. For example, the battery pack 100 may further include a busbar component for achieving an electric connection of the plurality of battery cells 20. Each battery cell 20 may be a secondary battery or a primary battery, and may also be a lithium-sulfur battery, a sodium-ion battery, or a magnesium-ion battery, but is not limited thereto. The battery cell 20 may be in the shape of a cylinder, a flat body, a cuboid, etc.

According to the known airtightness testing solutions of the disclosing party, a testing personnel first connects an exhaust tube of a vacuum pump to the explosion-proof valve 11a of the case 11, and the interior of the case 11 is pumped into a negative pressure state through the explosion-proof valve 11a. When the pressure inside the case 11 reaches -10000 Pa, the pumping to the case 11 is stopped, and the pressure inside the case 11 is tested again after 10 minutes of standing. By comparing the pressure change before and after the standing of the case, it is determined whether the battery pack 100 meets the requirements for airtightness.

However, on the one hand, the gas permeability of the watertight gas-permeable film is generally small, and the pumping speed is slow, making the testing inefficient. If the power of the vacuum pump is increased to accelerate the pumping with a higher negative pressure, it is possible to cause crack of the watertight gas-permeable film, resulting in damage to the explosion-proof valve 11a. The testing speed is difficult to meet the requirements of industrial production. On the other hand, the case 11 is made of a thin material, which can withstand a low pressure, and usually can only withstand more than ten kPa of airtightness test pressure. During testing, the vacuum pump cannot be separated from the battery pack. In order to avoid affecting the production takt, an airtightness test cycle is usually set to 3 to 15 minutes. During the testing, the air pressure inside the battery pack changes little and is easily affected by environmental factors such as temperature and humidity, and accordingly it cannot meet the requirements of high-precision airtightness testing. In addition, the exhaust tube of the vacuum pump needs to go through a connector of the explosion-proof valve that is plugged or unplugged repeatedly in a long-term test, and a tube joint is easily worn and deformed, resulting in large errors in test results.

Some embodiments of the disclosure provide a method for airtightness testing of a battery pack. The battery pack in the embodiments may refer to FIG. 2.

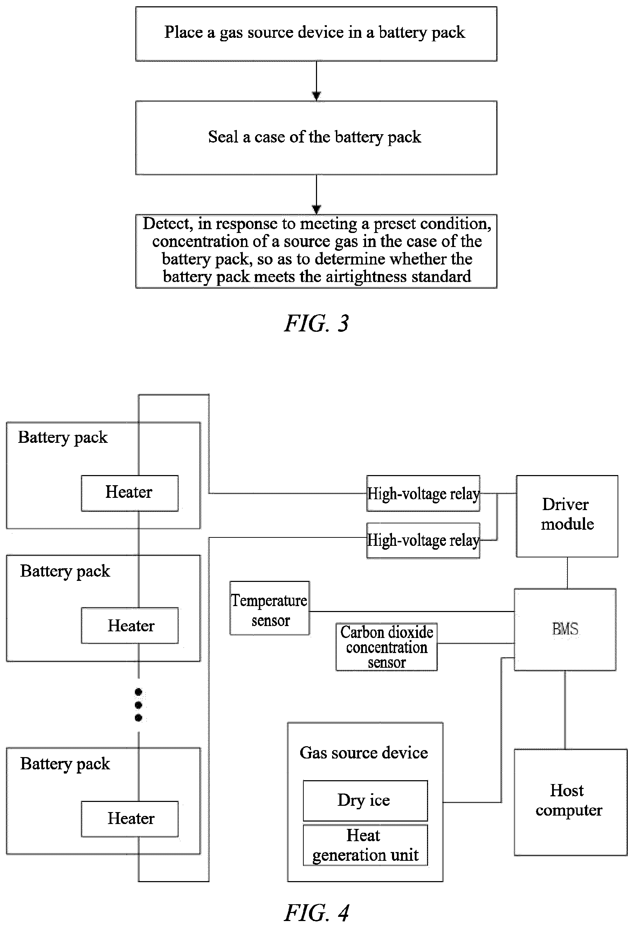

With reference to FIG. 3, the method includes the following steps: placing a gas source device in the case 10 of the battery pack 100; sealing the case 10; and detecting, if a preset condition is met, concentration of a source gas in the case 10, so as to determine whether the battery pack 100 meets the airtightness standard. The gas source device is used to release the source gas, and the preset condition includes allowing the battery pack 100 to stand for a preset duration.

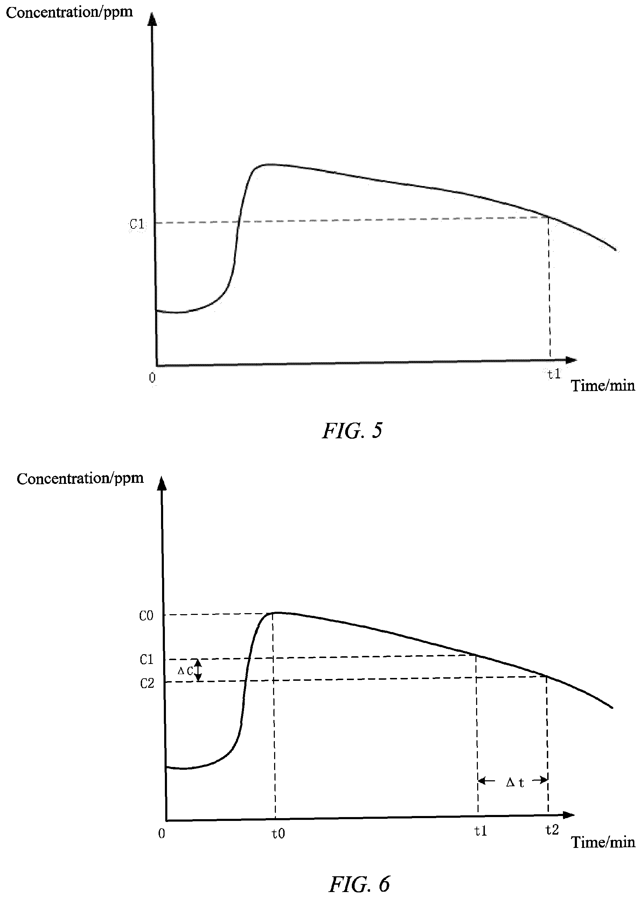

Optionally, the gas source device refers to dry ice, or is a container containing dry ice. The dry ice sublimates to carbon dioxide gas at normal pressure and temperature, and change in concentration of carbon dioxide in the battery pack 100 is detected to determine whether airtightness of the battery pack 100 meets the standard. FIG. 5 is a curve graph showing change in concentration of a source gas over time according to some embodiments of the disclosure. With reference to FIG. 5, since space inside the battery pack 100 is known, a preset weight of dry ice is placed. After a long standing cycle t1 (e.g., 10 hours), concentration C1 of carbon dioxide in the case is detected by a carbon dioxide concentration sensor arranged in the case 10. If the concentration C1 of carbon dioxide is higher than or equal to a preset concentration value, the battery pack 100 meets the airtightness standard. If the concentration C1 of carbon dioxide is lower than a preset concentration value, the battery pack 100 does not meet the airtightness standard. The preset concentration value can be obtained by the testing personnel through multiple tests.

It should be noted that "standing for a preset duration" in this disclosure should be understood as maintaining airtightness of the case 10 for a certain period of time. During this period of standing, the battery pack may be subjected to high temperature and high pressure tests, electrical function tests, transportation and storage, and the like. In some embodiments, it is possible to wait for the natural sublimation of the dry ice on the basis that a sublimation point of the dry ice is higher than room temperature. In yet some other embodiments, the dry ice can also be heated using a heating element in order to accelerate the sublimation of the dry ice. In still some other embodiments, the order of tests may also be adjusted, and a heating element such as a thermistor may also be used to heat the dry ice. Specific details will be described in subsequent embodiments.

Test results obtained by testing the gas concentration are more accurate than those of a differential pressure method. After standing for a long period of time, the gas concentration changes greatly and the test accuracy is higher. In addition, the battery pack, after being sealed, can still be used to perform subsequent functional tests and be stored and transported, accelerating the production takt.

Some embodiments of the disclosure further provide a method for airtightness testing of a battery pack. The battery pack in the embodiments may refer to FIG. 2. A battery cell 20, and a system for airtightness testing that includes a battery management system (BMS), a gas source device, and other peripheral circuits (not shown in the figure) are installed in the case 10 of the battery pack 100. In the embodiments, the gas source device refers to dry ice.

Refer to FIG. 2. The battery pack 100 includes a case 10 and a battery cell 20. The battery cell 20 is accommodated in the case 10. The case 10 is used to provide an accommodation space for the battery cell 20. The case 10 includes a first portion 11 and a second portion 12. The first portion 11 and the second portion 12 are fitted to each other in a covered manner, and the explosion-proof valve 11a is sealed by a seal head, so that the case 10 is sealed. Space for accommodating the gas source device is formed inside the case 10. Illustratively, a cavity is formed between the battery cell 20 and an inner wall of the case 10. The cavity has a shape corresponding to the gas source device, avoiding damage to an internal structure of the battery pack caused by formation of local condensed water due to the gas source device moving in the case. In some embodiments, the first portion 11 and/or the second portion 12 are/is provided with snap-fit fasteners for securing the gas source device. In yet some other embodiments, the first portion 11 and/or the second portion 12 are/is provided with a recess for accommodating the gas source device.

With reference to FIG. 4, a system for airtightness testing is arranged inside the battery pack 100 and includes a BMS, a temperature and humidity sensor (temperature sensor), a carbon dioxide concentration sensor, a driver module for driving a high-voltage relay, a heater for heating the battery cell, a heat generation unit for heating the gas source device, and other peripheral circuits. The heater may include a positive temperature coefficient heating resistive element or a silicone heating film, or it may be a charge-discharge circuit that uses DC-DC charging and discharging between a plurality of strings of battery cells to achieve heating. The heat generation unit is a small heating apparatus independent of the heater and is used to heat the gas source device. In some embodiments, the system for airtightness testing is electrically coupled to a host computer arranged outside the battery pack 100 via the BMS. The BMS receives an airtightness testing command from the host computer and sends a rate of change in concentration of carbon dioxide to the host computer. In some embodiments, the host computer may be a computer, a programmable logic controller (PLC), etc., which is in communication with the BMS to determine whether airtightness meets the requirements.
a) Assembly phase: A gas source device is placed in the battery pack. Specifically, before mounting a top cover of the battery pack, the testing personnel uses a mechanical arm to remove the gas source device from a freezer and places the gas source device in a cavity of the battery pack 100, then connects a low-voltage wiring harness of a heating unit to a master control box of the BMS, and finally mounts the top cover and seals the battery pack. Illustratively, a dry ice block is utilized as the gas source device in this solution. A heat generation unit (e.g., a PTC ceramic heating element) for heating the dry ice is attached to the dry ice block. The heat generation unit is connected to the BMS by the low-voltage wiring harness and starts or stops heating the dry ice on the basis of a control signal from the BMS. In some embodiments, the dry ice is placed in the middle of the battery pack 100, ensuring uniform distribution of concentration of carbon dioxide in the battery pack 100. In some embodiments, the dry ice may also be placed directly at a heater used to heat the battery cell 20 or at the battery cell 20. After the battery pack 100 is sealed, the dry ice inside the battery pack 100 is heated by the heat generation unit. By heating the dry ice, it not only accelerates sublimation of the dry ice, but also prevents the dry ice from absorbing a lot of heat during the sublimation and causing damage to the internal structure of the battery pack. In yet some other embodiments, the dry ice may be heated by a heater for heating the battery cell. The BMS detects the temperature of each battery cell 20 through a temperature sensor and controls the heater, avoiding affecting the consistency of performance of the battery cells 20 due to acceleration of the aging of some battery cells 20 because the local temperature of the battery cells 20 near the dry ice is too low. During heating, other test items such as a shockproof test can be performed on the battery pack. In addition, the problem that a seal head of an air pump tooling cannot be fitted well with the explosion-proof valve due to the wear caused by repeated plugging and unplugging is solved. In some embodiments, in order to prevent the dry ice from moving, when placing the dry ice, the mechanical arm secures the dry ice to a fixing recess or fixing bracket inside the battery pack 100.
b) Electrical testing phase: The testing personnel connects an external device (the host computer) to the BMS of the battery pack, and to starts the heat generation unit of the gas source device by the BMS, to accelerate sublimation of the dry ice. With reference to FIG. 6, concentration of carbon dioxide in the battery pack 100 first rises significantly at t0 until it reaches a peak concentration C0, and change in the concentration of carbon dioxide in this period of time is recorded. In FIG. 6, the vertical coordinate represents the concentration in ppm (Parts Per Million), i.e., the number of volumes of a source gas (carbon dioxide) contained in one million volumes of air; and the horizontal coordinate represents the time in min (Minute).
c) Steady pressure phase: A process of transferring the pack to a standing area after the electrical testing phase is completed, allowing the concentration in the pack to decrease steadily.
d) Test phase: After the battery pack 100 is subjected to standing for a first preset duration, concentration of the source gas inside the battery pack is detected by a carbon dioxide sensor connected to the BMS, and a first time t1 and a first concentration C1 are recorded at this time. The battery pack is then subjected to standing for a second preset duration (the standing time is Δt), and finally the pack is subjected to concentration detection, and a second time t2 and a second concentration C2 are recorded at this time. A concentration difference between the first concentration and the second concentration meets the condition: ΔC = C1 - C2. In some embodiments, the standing time Δt is longer than 2 hours, thereby solving the problem of an inaccurate result of airtightness testing caused by too short a test time. In yet some other embodiments, the standing time Δt is between 30 minutes and 1 hour, so that the testing is accelerated.
e) Determination phase: A leak rate of the battery pack 100 is calculated according to ΔC/Δt = (C1 - C2)/(t2 - t1). If the leak rate is lower than a preset standard, it is determined that the battery pack meets the requirements of airtightness, that is, it passes the airtightness test. Otherwise, the airtightness test is not passed.

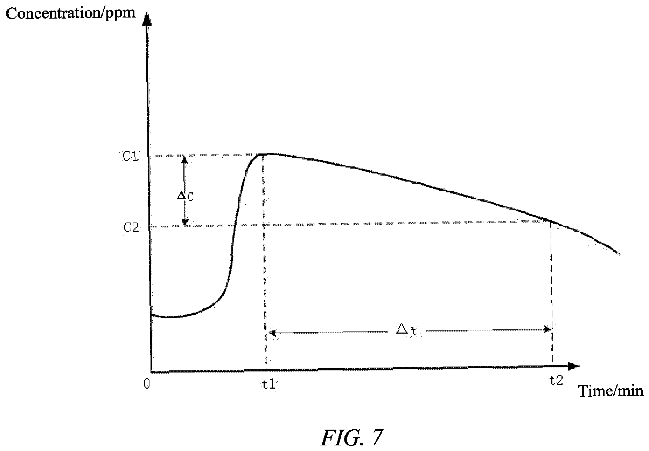

In yet some other embodiments, the leak rate of the battery pack 100 can be calculated on the basis of a difference between a peak value of the measured concentration of carbon dioxide and the measured concentration of carbon dioxide after the standing time Δt. With reference to FIG. 7, after dry ice is heated, the BMS records a curve of concentration of carbon dioxide in the battery pack 100 over time by a carbon dioxide concentration sensor, to obtain a peak concentration C1 of carbon dioxide and a concentration C2 after the standing time Δt (the second preset duration). The leak rate of the battery pack 100 can be calculated according to ΔC/Δt = (C1 - C2)/(t2 - t1).

In this way, airtightness of the battery pack can be detected more accurately to meet the requirements of higher-precision leak tightness test grading. It also overcomes the shortcomings that the positive pressure method and negative pressure method are prone to inaccurate test results caused by improper installation of a plug and the wear due to repeated plugging and unplugging of a plug seal. It can also shorten the overall time for airtightness testing.

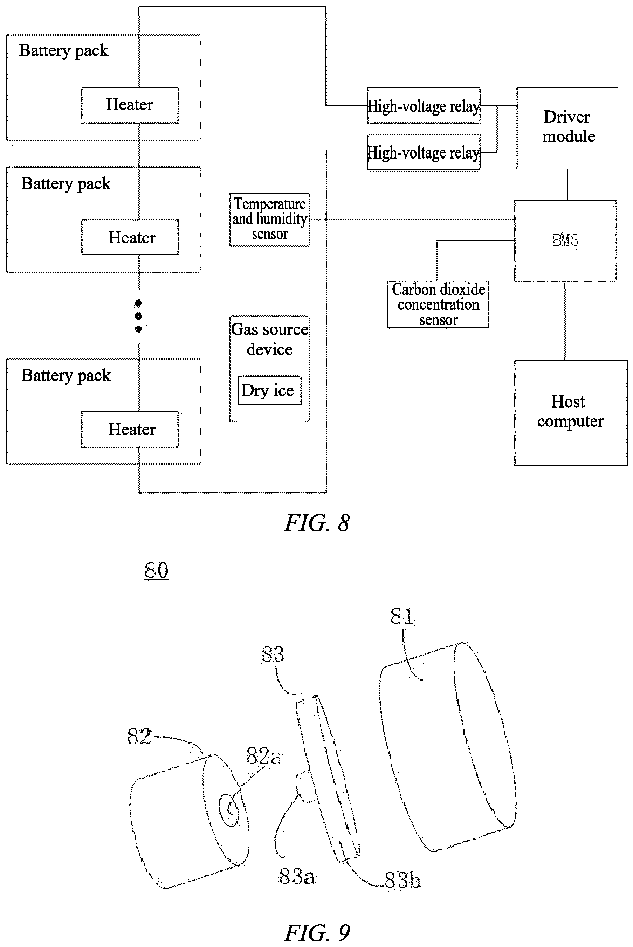

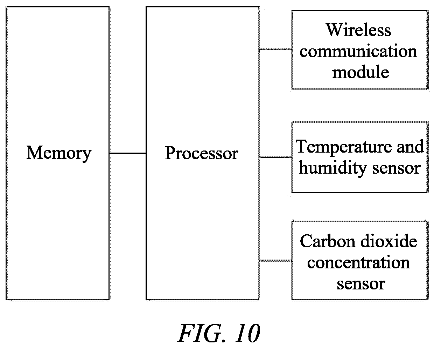

Some embodiments of the disclosure further provide a seal head for airtightness testing of a battery pack. With reference to FIG. 9 and FIG. 10, FIG. 9 is a hardware schematic diagram of a seal head for airtightness testing and FIG. 10 is a circuit block diagram of a seal head for airtightness testing. The seal head for airtightness testing is used to be mounted to the explosion-proof valve or balance valve of the battery pack to provide airtightness to the battery pack and also to make a determination on the basis of the concentration of the source gas detected in the battery pack. The seal head includes: a housing 81 used to be connected to the case of the battery pack, and a sealing element 82 and a detection assembly 83 arranged in the housing. The sealing element 82 is used to be inserted into an explosion-proof valve hole (e.g., 11a in FIG. 2) to achieve sealing of the explosion-proof valve hole. The sealing element 82 is typically made of a material with some ductility such as rubber. The sealing element 82 is provided with a communicating hole 82a. At least a portion of the detection assembly 83 is arranged in the housing. The detection assembly includes a probe portion 83a and a body portion 83b. The probe portion 83a is provided with a gas sensor for detecting a source gas. The probe portion 83a is configured to protrude from the body portion 83b and pass through the communicating hole 82a, so that the concentration of carbon dioxide in the explosion-proof valve hole 11a is detected while airtightness of the sealing element 83 is ensured. The detection assembly 83 further includes a processor and a memory. The memory stores a computer program. The computer program, when executed by the processor, causes the processor to perform the steps of the method in the embodiments of the disclosure. In some embodiments, the detection assembly 83 further includes a display module, such as an LED digital tube, for displaying information about the concentration of carbon dioxide or the result of whether the airtightness test is passed. The housing 81 is provided with a through hole at the display module so that the testing personnel can see the above result information. In still some other embodiments, the detection assembly 83 further includes a wireless communication module inside. The seal head for airtightness testing transmits the information of concentration of carbon dioxide to the host computer through the wireless communication module. The processor of the host computer determines whether the battery pack corresponding to the seal head meets the requirements of airtightness. Illustratively, the wireless communication module may be an RFID (Radio Frequency Identification) transmitter module. In this way, airtightness of the battery pack can be tested in bulk during a warehouse storage phase. This plug can meet the requirements of higher test accuracy.

Some embodiments of the disclosure further provide a device for airtightness testing of a battery pack. The device includes: a first module, configured to place a gas source device in a battery pack; a second module, configured to seal the battery pack; and a third module, configured to detect, in response to meeting a preset condition, concentration of a source gas in the battery pack, so as to determine whether the battery pack meets the airtightness standard; wherein the gas source device is used to release the source gas; and the preset condition includes allowing the battery pack to stand for a first preset duration.

Some embodiments of the disclosure further provide a system for airtightness testing of a battery pack. With reference to FIG. 8, the system for airtightness testing includes: a gas source device used to release carbon dioxide; a heater used to heat the battery pack, a heat generation unit used to heat carbon dioxide, a gas concentration sensor used to detect concentration of the source gas, and a BMS. The BMS includes a processor and a memory. The processor is electrically coupled with the first heating assembly, the second heating assembly, and the gas concentration sensor. The memory stores a computer program. When executed by the processor, the computer program performs the steps of the method according to other embodiments.

Some embodiments of the disclosure further provide a battery pack. The battery pack includes a device for airtightness testing according to the embodiments of the disclosure or a system for airtightness testing according to the embodiments of the disclosure.

Finally, it should be noted that the above embodiments are merely used for illustrating rather than limiting the technical solutions of the disclosure. Although the disclosure has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the disclosure, and should fall within the scope of the claims and the description of the disclosure. In particular, the technical features mentioned in the embodiments can be combined in any manner, provided that there is no structural conflict. The disclosure is not limited to the specific embodiments disclosed herein but includes all the technical solutions that fall within the scope of the claims.

## Claims

1. A method for airtightness testing of a battery pack, comprising the following steps:
placing a gas source device in a battery pack;
sealing the battery pack; and
detecting, in response to meeting a preset condition, concentration of a source gas in the battery pack, so as to determine whether the battery pack meets the airtightness standard;
wherein the gas source device is used to release the source gas; and the preset condition comprises allowing the battery pack to stand for a first preset duration.

2. The method according to claim 1, wherein the step of detecting, in response to meeting a preset condition, concentration of a source gas in the battery pack, so as to determine whether the battery pack meets the airtightness standard comprises the following sub-steps:
recording, in response to meeting a preset condition, the time when the source gas in the battery pack reaches a maximum concentration;
detecting, after a second preset duration from the time when the maximum concentration is reached, a first concentration of the source gas in the battery pack; and
determining, on the basis of the first concentration of the source gas, whether the battery pack meets the airtightness standard.

3. The method according to claim 1, wherein the step of detecting, in response to meeting a preset condition, concentration of a source gas in the battery pack, so as to determine whether the battery pack meets the airtightness standard comprises the following sub-steps:
determining, in response to meeting a preset condition, a rate of change in concentration of the source gas in the battery pack; and
determining, on the basis of the rate of change in concentration of the source gas, whether the battery pack meets the airtightness standard.

4. The method according to claim 3, wherein the step of determining, in response to meeting a preset condition, a rate of change in concentration of the source gas in the battery pack comprises the following sub-steps:
detecting, in response to meeting a preset condition, a second concentration of the source gas in the battery pack;
detecting, after a second preset duration, a third concentration of the source gas in the battery pack; and
determining, on the basis of the second concentration of the source gas and the third concentration of the source gas, the rate of change of the source gas in the battery pack.

5. The method according to claim 3, wherein the step of determining, in response to meeting a preset condition, a rate of change in concentration of the source gas in the battery pack comprises the following sub-steps:
recording, in response to meeting a preset condition, a maximum concentration of the source gas reached in the battery pack;
detecting, after a second preset duration from the time when the maximum concentration is reached, a fourth concentration of the source gas in the battery pack; and
determining, on the basis of the maximum concentration and the fourth concentration of the source gas, the rate of change in concentration of the source gas in the battery pack.

6. The method according to claims 1 to 5, wherein the gas source device comprises dry ice.

7. The method according to claims 1 to 5, wherein the preset condition further comprises: heating the gas source device.

8. The method according to claims 1 to 5, wherein the second preset duration is greater than 2 hours.

9. A device for airtightness testing of a battery pack, comprising:
a first module, configured to place a gas source device in a battery pack;
a second module, configured to seal the battery pack; and
a third module, configured to detect, in response to meeting a preset condition, concentration of a source gas in the battery pack, so as to determine whether the battery pack meets the airtightness standard;
wherein the gas source device is used to release the source gas; and the preset condition comprises allowing the battery pack to stand for a first preset duration.

10. A seal head for airtightness testing of a battery pack, comprising:
a housing;
a sealing element arranged in the housing and covered with an explosion-proof valve of the battery pack, wherein the sealing element is provided with a communicating hole; and
a detection assembly, at least part of which is arranged in the housing, wherein the detection assembly comprises a body portion and a probe portion, the probe portion is provided with a gas sensor for detecting a source gas, and the probe portion is configured to protrude from the body portion and pass through the communicating hole; and
the detection assembly comprises a processor and a memory, the memory stores a computer program, and the computer program, when executed by the processor, causes the processor to perform the steps of the method of any one of claims 1 to 8.

11. A system for airtightness testing of a battery pack, comprising:
a gas source device used to release a source gas;
a first heating assembly used to heat the battery pack;
a second heating assembly used to heat the gas source device; and
a gas concentration sensor used to detect concentration of the source gas;
wherein a processor is electrically coupled with the first heating assembly, the second heating assembly, and the gas concentration sensor.

12. The system for airtightness testing of a battery pack according to claim 11, wherein the battery management system further comprises a memory, the memory stores a computer program, and the computer program, when executed by the processor, causes the processor to perform the steps of the method of any one of claims 1 to 8.

13. A battery pack, comprising a device for airtightness testing of claim 9 or a system for airtightness testing of claim 11.
